# EUROPÄISCHE PATENTSCHRIFT

(11) **EP 2 715 113 B1**
(45) Veröffentlichungstag und Bekanntmachung des Hinweises auf die Patenterteilung: **19.10.2016**
(21) Anmeldenummer: 12724914.2
(22) Anmeldetag: 25.05.2012
(51) Int. Cl.: E04H 12/34, F03D 1/00

(54) **VERFAHREN ZUM ERRICHTEN, WARTEN UND DEMONTIEREN EINER WINDENERGIEANLAGE**
METHOD FOR SETTING UP, MAINTAINING AND DISASSEMBLING A WIND TURBINE
PROCÉDÉ DE CONSTRUCTION, DE MAINTENANCE ET DE DÉMONTAGE D'UNE ÉOLIENNE

(30) Priorität: 25.05.2011 DE 102011102316
(43) Veröffentlichungstag der Anmeldung: 09.04.2014
(73) Patentinhaber: X-Tower Constructions GmbH, 80469 München (DE)
(72) Erfinder: WAGNER, Philipp, 97638 Mellrichstadt (DE)
(74) Vertreter: Prinz & Partner mbB
(86) Internationale Anmeldenummer: PCT/EP2012/002275
(87) Internationale Veröffentlichungsnummer: WO 2012/159775

(56) Entgegenhaltungen:
- WO-A2-2011/031577
- FR-A1- 2 903 739
- US-A1- 2010 281 819
- US-A1- 2011 067 353

## Beschreibung

Die Erfindung betrifft ein Verfahren zum Errichten von Windenergieanlagen, insbesondere mit einer Nabenhöhe von mindestens 140 m Höhe.

Die Windenergieanlagen mit horizontaler Rotorachse, auf die sich die erfindungsgemäßen Verfahren beziehen, haben einen Turm und auf der Turmspitze angebrachte, sehr schwere Großkomponenten. Diese Großkomponenten sind Gondel, elektrischer Generator, Rotor mit wenigstens einem Rotorblatt und, sofern vorhanden, einem Getriebe für den Rotor.

Windenergieanlagen unterschiedlicher Größe, Leistung und unterschiedlichen Typs verbreiten sich mehr und mehr, um elektrische Energie aus der kinetischen Energie des Windes zu erzeugen. Die Effektivität einer solchen Windenergieanlage hängt unter anderem davon ab, dass der Wind möglichst lange und gleichmäßig über das Jahr verteilt vorhanden ist.

Es ist bekannt, dass Windenergieanlagen umso höhere Erträge aus dem über das Jahr verteilten Windangebot schöpfen können, je höher die Windenergieanlagen gebaut werden, da in größeren Höhen der Wind im Durchschnitt schneller und laminarer weht. Dies ist insbesondere für küstenferne Gebiete, hügelige oder gebirgige Gebiete der Fall.

In den vergangenen Jahren geht aufgrund von Wirtschaftlichkeitsüberlegungen der Trend zu immer größeren Windenergieanlagen, wobei hier vor allem der am weitesten verbreitete Typ von Windenergieanlagen, der des mehrblättrigen, horizontalachsigen Rotors auf einem Turm weiterhin das größte Marktpotential hat. Das Problem dieses Windenergieanlagentyps besteht vor allem darin, dass seine Großkomponenten mit der Höhe der Nabe mitwachsen und damit die Montage, Demontage und vor allem die Wartung solcher Groß-Windenergieanlagen mit Nabenhöhen ab 140 m Höhe entscheidende Faktoren für die Wirtschaftlichkeit sind.

In jüngster Vergangenheit wurden zudem verschiedene Turmtypen erprobt, um die Nabenhöhe anzuheben und den Rotor in die windertragreicheren höheren Luftschichten zu bringen. Hierbei sind insbesondere der Hybridturm mit einem Betonschaft und einem aufgesetzten Stahlmast, auf dem die Gondel sitzt, sowie Gittermasten zu nennen.

Das Errichten von solchen Windenergieanlagen erfolgt normalerweise in Windparks unter Verwendung von mobilen Groß-Kränen. Die derzeit höchsten Kräne sind Raupenkräne, mit deren Hilfe die Großkomponenten auf die Nabenhöhen von 140 m und mehr angehoben werden. Die Raupenkräne oder auch Autokräne werden benutzt, um den Turm selbst zu bauen, indem beispielsweise Beton- oder Stahlringe oder Beton- oder Stahlsegmente als Fertigbauteile übereinander gestapelt und miteinander verbunden werden. Alternativ hierzu kann natürlich auch eine Kletterschalung verwendet werden. Der mobile Groß-Kran schafft dann die Schalungsteile und den Beton in die entsprechende Höhe. Gleitschalungen werden mittels Schienenliften vertikal mit Beton und Baustahl beliefert, wobei diese Lifte ausschließlich für den Transport von zum Betonieren nötigen Baustoff zum augenblicklichen Turmende des Betonschaftes dienen. Nach der Errichtung des Betonschaftes wird die Gleitschalung abgebaut und über den Schienenlift wieder zum Boden transportiert.

Die Tagesmieten für solche Groß-Kräne sind immens, unabhängig davon, dass nur wenige dieser Spezialgeräte in den einzelnen Ländern zur Verfügung stehen, bzw. diese durch dichte Einsatzpläne stark gebucht sind. Allein der Aufbau eines großen Raupenkrans dauert mehrere Tage. Kräne mit 150 t Hublast, die bis 140 m reichen, haben Aufbauzeiten von etwa drei Tagen.

Tagesmieten von EUR 10.000,00 und mehr sind dabei keine Seltenheit. Diese Groß-Kräne können auch nur bei allenfalls geringem Wind arbeiten, so dass es naturgemäß zu Verzögerungen auf der Baustelle kommt, sobald das Wetter nicht optimal ist, da der Abstand zwischen Standfläche und Montagepunkt über 140 Meter beträgt.

Für die Wartung, insbesondere bei Defekten an den Großkomponenten, müssen die Groß-Kräne kurzfristig angemietet werden, was jedoch oft wegen der geringen Stückzahl am Markt gar nicht möglich ist. Darüber hinaus müssen die Wege zu den Windenergieanlagen und die Fläche um die Windenergieanlagen stets für diese Groß-Kräne in Stand gehalten werden bzw. gerodet bleiben, um überhaupt einen kurzfristigen Reparatureinsatz mit Groß-Kränen zu ermöglichen. Auch dies reduziert die Rendite der Windenergieanlagen aufgrund der Stillstandszeiten bis zum Ordern, zum Aufbau und zum Einsatz der Großkräne bei geeignetem Wetter.

Um den Einsatz der teuren Groß-Kräne zu vermeiden, wurden in der Vergangenheit beim Errichten von Türmen von Windenergieanlagen mitwachsende Turmdrehkräne eingesetzt. Diese Kräne können sich ab ca. 30 m Höhe selbst aufbauen und sind relativ leistungsfähig mit einer maximalen Last auf den Kragarm von über 1000 Metertonnen. Sie können sozusagen unbegrenzt hoch bauen, haben jedoch ebenfalls enorme Tagesmieten, da auch sie über den gesamten Zeitraum des Bauverfahrens eine sehr hohe Leistungsfähigkeit vorhalten. Mit solchen mitwachsenden, großen Turmdrehkränen wird der Turm errichtet und werden die Großkomponenten nach Errichten des Turms auf die Turmspitze aufgesetzt. Auch hier liegen zwischen dem letzten Festhaltepunkt und dem Montagepunkt 50 oder mehr Meter. Im Wartungsfall ist der gesamte Turmdrehkran erneut zu ordern, zu stellen und einzusetzen.

Darüber hinaus wurde auch bereits ein Gittermastturm einer Windenergieanlage mit einem temporär aufgesetzten Krankopf errichtet. Mit diesem Krankopf und einem schräg verlaufenden Tragseil konnte die Gondel zur Turmspitze gehievt werden. Das Zugmittel wurde am Krankopf umgelenkt und zu einer am Boden befestigten Winde geführt. Der Krankopf wurde nach Anbringen der Gondel wieder demontiert. Über externe, separat stehende, mobile Groß-Kräne wurden anschließend die leichteren Rotorblätter zur Nabe gebracht.

Um die Reparatur der Großkomponenten schnell realisieren zu können, wurde auch bereits vorgeschlagen, permanent einen Kran an der Turmspitze zu installieren, mit dem dann die Großkomponenten getauscht werden können. Dieser Vorschlag konnte sich bislang nicht durchsetzen, da die Kosten für einen solchen hoch motorisierten und leistungsstarken Kran im Verhältnis zur Zahl seiner Einsätze zu hoch sind.

Sowohl die mobilen Raupengittermastkräne, als auch die Turndrehkräne werden auf dafür vorgesehenen Spezialtiefladern zu ihrem Einsatzort gebracht und dort mit Hilfskränen errichtet oder teilerrichtet. Der logistische Aufwand zur Stellung eines Raupengittermastkranes oder eines Turmdrehkranes mit der erforderlichen Leistungsfähigkeit ist enorm und generiert weitere Kosten für den An- und Abtransport sowie für den Auf- und Abbau.

Oberhalb von 170 Metern Nabenhöhe sind derzeit keine freistehenden Raupengittermastkräne mehr verfügbar.

Aus der US 2011/0067353 A1 sind verschiedene Hebezeuge und Kräne bekannt, mit denen der Turm einer Windenergieanlage errichtet werden kann, indem z.B. vorgefertigte Ringe durch das Innere des teilweise errichteten Turmes nach oben gezogen werden, und zwar durch ein auf dem obersten Ring angebrachtes Gerüst. Eine andere Ausführungsform sieht einen seitlich am Turm angebrachten Kran vor, welcher die vorgefertigten Ringe und schließlich die Gondel samt Rotoren an die Turmspitze fördert.

Die FR 2 903 739 A1 beschreibt ein Verfahren zum Demontieren des Rotors oder der Gondel einer Windenergieanlage, bei dem ein Kran über eine Winde zur Turmspitze hochgezogen werden kann und nach der Demontage wieder vom Turm entfernt wird.

Aufgabe der Erfindung ist es, ein Verfahren zum Errichten einer Windenergieanlage zu schaffen, welche obige Nachteile vermeidet und bei denen insbesondere die Kosten für die Errichtung gesenkt werden können.

Das erfindungsgemäße Verfahren zum Errichten einer Windenergieanlage, insbesondere mit einer Nabenhöhe von mindestens 140 m, mit einem Turm und auf der Turmspitze angebrachten Großkomponenten, die eine Gondel, einen Generator und einen Rotor mit wenigstens einem Rotorblatt sowie, falls vorhanden, einem Getriebe für den Rotor umfassen, ist durch die im Anspruch 1 angegebenen Schritte gekennzeichnet.

Das erfindungsgemäße Verfahren zum Errichten arbeitet mit für die Errichtung einzelner Teile und Komponenten maßgeschneidert großen Hebezeugen, ohne externe Groß-Kräne oder Hubschrauber zu benötigen. Da unterschiedlich schwere und unterschiedlich teure Hubwerkzeug zu verschiedenen Zeitpunkten eingesetzt werden, kann das teure, schwere Hubwerkzeug möglichst nur kurzzeitig eingesetzt werden, was die Wirtschaftlichkeit erheblich verbessert. Zudem dient das Turmbauwerk als Kranschaft, was zusätzliche, separate Kranschafte oder Gitterkranausleger bis in diese Höhen erübrigt. Das Schwerlast-Hebezeug wird unter Abstützung am Turm zur Turmspitze transportiert und an diesem temporär befestigt und unter Abstützung am Turm wieder vom Turm demontiert. Das bedeutet, das Schwerlast-Hebezeug wird zur Turmspitze gebracht und wird im Bereich der Turmspitze montiert. Das Leichtlast-Hebezeug kann das Schwerlast-Hebezeug auf die Turmspitze heben. Vorzugsweise befördert das Leichtlast-Hebezeug das Schwerlast-Hebezeug nach der Montage der Großkomponenten auch wieder von der Turmspitze zum Boden, was jedoch nicht zwingend der Fall sein muss. Das Schwerlast-Hebezeug kann sich gegebenenfalls auch selbsttätig von der Turmspitze zu Boden bewegen.Für die Errichtung des Turms wird ein Leichtlast-Hebezeug eingesetzt, welches nicht in der Lage wäre, einen Generator zur Turmspitze zu bringen. Dieses Leichtlast-Hebezeug ist aber in der Lage, die Errichtung des Turms zu übernehmen, da es mit dem Turm nach oben wandert und sich am bereits errichteten Teil des Turmes abstützt. Der errichtete Teil des Turmes bildet somit den Kranschaft für das Leichtlast-Hebezeug. Auch für das nur kurzzeitig eingesetzte Schwerlast-Hebezeug bildet der Turm den Kranschaft, das heißt, auch dieses Schwerlast-Hebezeug stützt sich am Turm ab. Weder das Leichtlast- noch das Schwerlast-Hebezeug sind somit externe, separat stehende Kräne wie Raupenkräne, Autokräne oder Turmdrehkräne. Durch die Abstützung am Turm und die Verwendung des Turms als Kranschaft kann das Leichtlast-Hebezeug sehr leicht bauen, und es kann eine kostengünstige Variante eines Hebezeugs eingesetzt werden.

Allenfalls für die ersten wenigen Meter (maximal 30 m, vorzugsweise maximal nur 10 m) des Turmschaftes kann ein externer Kran, z.B. ein kleiner Autokran verwendet werden, der zum Beispiel die ersten Fertigbauteile, die erste Schalung oder das Leichtlast-Hebezeug aufsetzt. Anschließend ist gemäß der bevorzugten Ausführungsform der Erfindung kein externer Kran erforderlich.

Die bevorzugte Ausführungsform sieht sogar vor, dass überhaupt kein externer Kran, auch nicht für die vorgenannten Ausnahmen, verwendet wird.

Das Schwerlast-Hebezeug ist folglich nur für die wenigen Spitzenlasten, die am Ende des Herstellungsverfahrens der Anlage an der Spitze montiert werden, und damit temporär kurzzeitig eingesetzt. Beim erfindungsgemäßen Verfahren wird auch kein Helikopter eingesetzt.

Der Begriff "Leichtlast-Hebezeug" sagt im Vergleich zum Begriff "Schwerlast-Hebezeug" aus, dass das Leichtlast-Hebezeug eine deutlich geringere, Maximal-Hebelast aufweist als das Schwerlast-Hebezeug und dass das Leichtlast-Hebezeug nicht in der Lage ist, den kompletten Generator der Windenergieanlage, welcher bei Groß-Windenergieanlagen heutzutage ein Gewicht von üblicherweise über 40 t hat, oder, vorzugsweise, sogar irgendeines der vorgenannten Großkomponenten zur Spitze befördern zu können.

Somit sind die Begriffe "Leicht" und "Schwer" Begriffe, die einen Vergleich der Maximallasten der eingesetzten Hebezeuge charakterisieren.

Alternativ hierzu wäre es auch möglich, einen Kragarm oder ein relativ kleines Krangestell im Bereich der Turmspitze permanent oder nur temporär für das Montieren der Großkomponenten zu montieren und das teure Hebemittel, d.h. den Antrieb für den Schwerlastkran, am Boden zu belassen, bei Bedarf heranzufahren und an ein auf- und abwickelbares Zugmittel anzukoppeln, das bis zum Kragarm oder Krangestell reicht und dort umgelenkt wird. Dadurch ergibt sich ein Schwerlastkran mit Antrieb am Boden.

Gemäß der bevorzugten Ausführungsform hat das Leichtlast-Hebezeug eine um mindestens den Faktor 2, vorzugsweise mindestens den Faktor 10 geringere Maximal-Hebelast als das Schwerlast-Hebezeug.

Das Schwerlast-Hebezeug hat, so sieht es die Erfindung in einer Ausführungsform vor, eine Hebekraft von mindestens 40 t.

Bevorzugt sollte das Schwerlast-Hebezeug vor der Inbetriebnahme der Windenergieanlage, das heißt vor dem Permanentbetrieb der Anlage, wieder vom Turm demontiert sein. Für Testläufe vor der eigentlichen Inbetriebnahme kann das Schwerlast-Hebezeug noch an der Turmspitze verbleiben, um zum Beispiel Großkomponenten auszutauschen, die sich beim Anlaufbetrieb als defekt herausgestellt haben.

Das Leichtlast-Hebezeug kann ein Schienenlift oder ein mitkletternder Kran sein. Schienenlifte werden ähnlich wie Aufzüge auf der Außenseite des Turmes befestigt und haben beispielsweise baukastenartig zusammensetzbare Schienenelemente, die übereinander gestapelt werden. Mit diesen Schienenliften werden Personen, aber auch Lasten an die Turmspitze befördert, zum Beispiel auch Material wie Ortbeton oder Fertigteile des Turmschaftes.

Unmittelbar nach der Errichtung der Windenergieanlage, vor deren Dauereinsatz, wird das Leichtlast-Hebezeug vorzugsweise wieder entfernt.

Das Leichtlast-Hebezeug oder das Schwerlast-Hebezeug kann auch noch ein sogenanntes Hilfs-Hebezeug zur Turmspitze transportieren, welches permanent an der Windenergieanlage befestigt bleibt, das heißt, auch während des regulären Betriebes der Windenergieanlage.

Wenigstens eines der folgenden Materialien oder der folgenden Gegenstände zum Errichten des Turms werden bzw. wird durch das Leichtlast-Hebezeug am Turm hoch gefahren, um den Turm zu erhöhen: Beton, Bewehrung, Betonschalung, Fertigteil-Turmsegmente oder Fertigteil-Turmringe, Holz, Compositebauteile, ein Stahlmast und/oder Stahlmastelemente.

Auch zum Warten oder Demontieren der Windenergieanlage ist kein externer Kran nötig, der die Großkomponente oder die Großkomponenten von der Turmspitze entfernt. Vielmehr wird auch hier das Turmbauwerk in der gleichen Weise als Kranschaft eingesetzt, indem das Schwerlast-Hebezeug nur für den kurzen Arbeitszyklus des Auswechselns oder Demontierens der Großkomponenten eingesetzt wird, ansonsten aber vom Turm entkoppelt ist, so dass nicht jeder Turm einen eigenen, teuren Schwerlastantrieb benötigt oder externe Kräne gemäß dem Stand der Technik gestellt werden müssen. Erst, sobald eine Wartung oder Demontage ansteht, wird das Schwerlast-Hebezeug antransportiert und an den Turm angekoppelt, mit dem es, wie bei der Errichtung, seine Arbeit verrichten kann

Dementsprechend wird das Schwerlast-Hebezeug beim Auswechseln einer Großkomponente vor der Wiederinbetriebnahme, gegebenenfalls nach einem Testlauf, wieder von der Windenergieanlage entfernt.

Insbesondere wird das Schwerlast-Hebezeug unter Abstützung an der Turmspitze zur Turmspitze hochgezogen und temporär an dieser befestigt und nach dem Auswechseln beziehungsweise Abbauen des oder der Großkomponenten wieder unter Abstützung an der Turmspitze von der Windenergieanlage entfernt, ohne sich eines externen Krans oder eines Helikopters bedienen zu müssen.

Auch hier gilt wie beim Verfahren zum Errichten der Windenergieanlage: Es ist auch möglich, einen Kragarm oder ein relativ kleines Krangestell an der Turmspitze permanent oder nur temporär für das Montieren/Austauschen/Demontieren der Großkomponenten zu montieren und das teure Hebemittel, d.h. den Antrieb für den Schwerlastkran, am Boden zu belassen, bei Bedarf heranzufahren und an ein auf- und abwickelbares Zugmittel anzukoppeln, das bis zum Kragarm oder Krangestell reicht und dort umgelenkt wird. Dadurch ergibt sich ein Schwerlastkran mit Antrieb am Boden. Dasselbe gilt im Übrigen auch für das im Folgenden vorgestellte Hilfs-Hebezeug. Auch hier kann der Antrieb am Boden sitzen und eine Zugmittelumlenkung im Turmspitzenbereich vorhanden sein.

Generell gilt für die erfindungsgemäßen Verfahren: Wenn nur der Antrieb des Schwerlast-Hebezeugs für die Montage oder Demontage der Großkomponenten kurzzeitig zum Turm gebracht und auf- und abgebaut wird, bildet der Antrieb, auch Hebemittel genannt, das mobile Schwerlast-Hebezeug. Werden Antrieb und Krangestell/Kragarm temporär für die Montage/Demontage der Großkomponenten auf- und wieder abgebaut, bilden Antrieb und Krangestell oder Antrieb und Kragarm das mobile Schwerlast-Hebezeug.

Vorzugsweise ist ein Hilfs-Hebezeug an der Turmspitze angebracht, welches in der Lage ist, das Schwerlast-Hebezeug vom Boden zur Turmspitze oder ein Zugmittel zum Ankoppeln des Schwerlast-Hebezeugs vom Boden zur Turmspitze zu heben.

Das Hilfs-Hebezeug sollte vorzugsweise permanent im Bereich der Turmspitze, z.B. an der Turmspitze oder der Gondel, befestigt sein.

Ausführungsformen für das Hilfs-Hebezeug sind einfache elektrische Winden, also kostengünstige, robuste und zuverlässige Hebezeuge. Die Kosten für solche Hebezeuge werden schon beim ersten Einsatz amortisiert, verglichen mit dem bisherigen Aufwand zum Warten von Großkomponenten.

Das Hilfs-Hebezeug kann an einem Turmkragarm oder an der Gondel selbst vorgesehen sein. Die Gondel steht gegenüber der Turmspitze seitlich vor und bietet eine gute Möglichkeit, um von ihr Zugmittel zum Boden herabzulassen. Alternativ hierzu kann ein einfacher Kragarm etwas von der Turmspitze seitlich abstehen, welcher permanent an der Turmspitze befestigt ist. Über ihn wird dann das Zugmittel des Hilfs-Hebezeugs zum Boden herabgelassen, um das Schwerlast-Hebezeug zur Turmspitze zu bringen oder um das Zugmittel des Schwerlast-Hebezeugs zur Turmspitze zu bringen, damit sich das Schwerlast-Hebezeug selbst zur Spitze hochziehen kann.

Die nachfolgenden Optionen sind sowohl für das Verfahren zum Errichten als auch das zum Montieren und Demontieren anwendbar.

Das Schwerlast-Hebezeug ist vorzugsweise ebenfalls eine Winde oder ein Litzenheber oder setzt eine Winde oder einen Litzenheber als Hebemittel ein, jedoch mit deutlich höherer Hebekraft als für das Leichtlast-Hebezeug. Winden oder Litzenheber sind relativ kostengünstige Massenbauteile, deren Anschaffung einem Bruchteil der Anschaffung eines Autokrans entspricht und die darüber hinaus sehr wartungsarm sind. Darüber hinaus sind Winden und Litzenheber sehr robust und leicht manövrierfähig, leicht zu verstauen und zu transportieren. Ein Windparkanlagenbetreiber kann sich ein einzelnes solches, relativ preiswertes Hebezeug anschaffen und an seinem Windpark lagern und bei Bedarf sehr einfach und schnell an die defekte Windenergieanlage transportieren. Gleiches gilt für die Hersteller, insbesondere in Bezug auf die Gewährleistungsverpflichtung im Zusammenhang mit den inzwischen üblichen Vollwartungsverträgen und dem damit zu unterhaltenden Servicenetz.

Das Schwerlast-Hebezeug kann einen Kran mit Krangestell aufweisen, der zum Warten oder Demontieren temporär an die Turmspitze gebracht und nach der Wartung bzw. Demontage der Großkomponenten wieder von der Turmspitze entfernt wird. Somit umfasst bei dieser Ausführungsform das Schwerlast-Hebezeug das Krangestell und den Antrieb, also das Hebemittel (z.B. Litzenheber oder Winde).

An der Turmspitze kann aber auch permanent ein einen Ausleger aufweisendes Krangestell vorhanden sein, an den das Schwerlast-Hebezeug zur Bildung eines Krans temporär angekoppelt wird.

Das Krangestell kann vertikal verfahrbar, schwenkbar und/oder um den Turm verfahrbar sein, um die Großkomponenten von der Turmspitze abzusenken oder zur Turmspitze zu bringen.

Zur schnellen Montage des Schwerlast-Hebezeugs sollten an der Turmspitze permanent Halterungen für das Schwerlast-Hebezeug angebracht sein.

Diese Halterungen können an einem oder mehreren der folgenden Komponenten angebracht sein:
Einem Kopfadapter als Übergang zwischen dem Turm und der Gondel,
einem Übergangsstück zwischen einem unteren und oberen Turmabschnitt,
einem Zwischenflansch zur Befestigung eines Stahlmasten oder einer Gondel, einem Teil des Maschinenrahmens der Windenergieanlage oder einem anderen Adapterstück zwischen Turmkrone und Windturbine,
einem auf einem unteren Turm aufgesetzten Stahlmast.

Diese Halterungen sind beispielsweise vom Turm oder vom Adapter oder vom Maschinenrahmen oder von Teilen des Maschinenrahmens oder von anderen Übergangsstücken seitlich abstehende Halter, seitlich zugängliche Flansche, Dübel oder Bohrungen.

Alternativ oder zusätzlich hierzu kann an der Turmspitze eine Kranbrücke permanent angebracht sein, auf der das Schwerlast-Hebezeug aufgesetzt und verfahren werden kann. Das Schwerlast-Hebezeug besteht in diesem Fall aus einem Hebemittel mit einem entsprechenden Antrieb und einer Art Kranwagen oder Kranarm oder Nadelausleger.

Eine Option sieht vor, dass an der Turmspitze ein Turmkragarm permanent vorhanden ist, an dem das Schwerlast-Hebezeug angreift. Dieser Kragarm kann auch starr ausgeführt sein.

Anders als bei der Variante, bei der das Leichtlast-, Schwerlast- oder Hilfs-Hebezeug von einem anderen Hebezeug zur Turmspitze hochgezogen wird, können sich eine oder mehrere dieser Hebezeuge auch selbst zur Turmspitze hochziehen.

Insbesondere wenn das Hebezeug ein Krangestell und zusätzlich das Hebemittel, also den Antrieb, aufweist, kann es vorteilhaft sein, die Komponenten gemeinsam hochzuziehen, an der Turmspitze zu befestigen und sie z.B. dann in die Ausgangsposition zu schwenken. Alternativ hierzu kann das Hebezeug auch befestigt und durch die Halterung durchgesteckt werden, um in die Arbeitsposition zu gelangen.

Das Schwerlast-Hebezeug sollte allein eine solche Hebekraft aufweisen, dass es jedes der Großkomponenten zur Spitze heben kann.

Die bevorzugte Ausführungsform der Erfindung sieht vor, dass das Schwerlast-Hebezeug eine Hebekraft von bis zu 300 t aufweist.

Das Hilfs-Hebezeug sollte eine Hebekraft maximal 25 t, vorzugsweise maximal 20 t und/oder das Leichtlast-Hebezeug sollte eine Hebekraft von bis zu maximal 2 t haben.

Das Hilfs-Hebezeug sollte darüber hinaus bevorzugt eine ausreichende Hebekraft besitzen, um das Schwerlast-Hebezeug insgesamt zur Turmspitze hochzuziehen.

Die Erfindung sieht insbesondere vor, dass das Schwerlast-Hebezeug bei der Montage und/oder Demontage der Großkomponenten im Bereich der Turmspitze befestigt ist, so dass keine langen Hebelarme wie bei einem am Boden aufgesetzten Turmdreh- oder Mobilkran vorhanden sind, bei denen die Positionierung der daran hängenden Komponenten für die Montage/Demontage sehr schwierig ist, erst recht bei Wind.

Das Schwerlast-Hebezeug umfasst vorzugsweise, was nicht einschränkend zu verstehen ist, insbesondere ein elektrisch angetriebenes Hebemittel, z.B. eine Winde oder einen Litzenheber, sowie einen Kragarm oder ein Krangestell, so dass es in dem an der Turmspitze montierten Zustand über die Gondel noch nach oben ragt und in der Lage ist, die Gondel sehr einfach zum Boden herabzulassen.

Um eine Führung des langen, angetriebenen Zugmittels von der Turmspitze zum Boden zu erhalten, ist z.B. ein gespanntes und/oder längs des Turms befestigtes Führungsmittel z.B. in Form eines Halte- oder Führungsseils vorgesehen. Dies gilt unabhängig davon, ob der Antrieb für das Hebezeug an der Turmspitze oder am Boden steht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine schematische Ansicht einer Windenergieanlage, die nach dem erfindungsgemäßen Verfahren errichtet und nach einem nicht unter die Patentansprüche fallenden Verfahren gewartet und demontiert werden kann, wobei in Figur 1 ein nach dem bisherigen Stand der Technik verwendeter mobiler Schwerlastkran mit dargestellt ist,
Figur 2 eine Variante eines Verfahrens nach dem Stand der Technik zum Errichten einer Windenergieanlage mit einem mitwachsenden Kran,
Figur 3a eine Ausführungsform des erfindungsgemäßen Verfahrens, bei dem Fertigteile über einen Schienenlift zu einem Turm zusammengesetzt werden,
Figur 3b eine Variante des erfindungsgemäßen Verfahrens, bei dem über einen Schienenlift der Turm mit Ortbeton errichtet wird,
Figuren 4a und b verschiedene Varianten eines mitkletternden Leichtlast-Hebezeugs zum Errichten der Windenergieanlage nach dem erfindungsgemäßen Verfahren, das je drei Arbeitsschritte zeigt,
Figuren 5a bis d verschiedene Varianten des bei dem erfindungsgemäßen Verfahren eingesetzten Schwerlast-Hebewerkzeugs,
Figuren 6a bis e verschiedene Varianten des erfindungsgemäßen Verfahrens, bei denen das Schwerlast-Hebezeug unterschiedlich am Turm befestigt ist,
Figuren 7a bis l verschiedene bei den erfindungsgemäßen Verfahren verwendete Halterungen an der Turmspitze zur temporären Anbringung des Schwerlast-Hebezeugs,
Figuren 8a bis c verschiedene Schritte des erfindungsgemäßen Verfahrens, bei denen Großkomponenten an die Turmspitze montiert werden,
Figuren 9a bis d verschiedene Varianten des erfindungsgemäßen Verfahrens mit unterschiedlichen Schwerlast-Hebezeugen beim Hochziehen oder Herablassen, und
Figuren 10a bis d die verschiedenen Schwerlast-Hebezeuge, die sich jedoch selbst in die Arbeitsposition hochziehen.

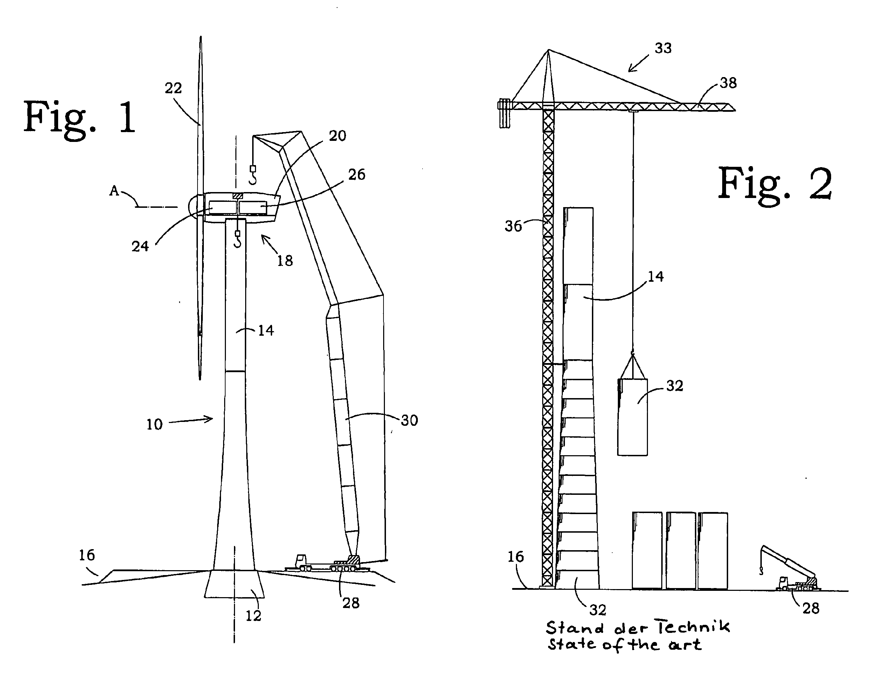

In Figur 1 ist eine Windenergieanlage 10 dargestellt, die ein Fundament 12, einen Turm mit einem Schaft 14, der auf dem Fundament 12 sitzt, eine auf die Spitze 18 des Turms aufgesetzte Gondel 20 mit einem mehrere Rotorblätter 22 aufweisenden Rotor, ein mit der Nabe des Rotors gekoppeltes Getriebe 24 sowie einen nachgeschalteten Generator 26 zur Stromerzeugung aufweist. Der Begriff "Turmspitze" ist nicht auf die Oberseite des freien Endes des Schafts 14 beschränkt, sondern steht für den oberen Endabschnitt des Turms, hier des Schafts 14.

Die Windenergieanlage hat eine horizontal stehende Rotornabe mit einer Achse A, die mindestens 140 m über dem Boden liegt. Es handelt sich folglich um eine Groß-Windenergieanlage.

Die komplett bestückte Gondel 20, das Gehäuse der Gondel, das üblicherweise in dem Gondelgehäuse untergebrachte Getriebe 24 (falls vorhanden) sowie der ebenfalls in dem Gondelgehäuse sitzende Generator 26 und die Rotorblätter 22 bilden jeweils sogenannte Großkomponenten, die an der Spitze 18 sitzen und deren Gewicht jeweils mehrere Dutzend Tonnen beträgt.

Zur Errichtung einer solchen Windenergieanlage oder zur Wartung, worunter auch Reparatur fällt, und zum Abbau wurden bislang mobile Großkräne, zum Beispiel Raupen- oder Autokräne 28 verwendet, die beispielsweise Teleskop- oder Gitterausleger 30 aufwiesen. Diese mobilen Kräne wurden auch für die Errichtung des Schaftes 14 eingesetzt.

Der Schaft 14 selbst kann verschiedenartig hergestellt werden, zum Beispiel indem ein unterer Abschnitt aus Beton ist, auf den oben ein Stahlmast aufgesetzt wird, der das obere Ende des Schafts 14 bildet. Solche Türme von Windenergieanlagen werden als Hybrid-Türme bezeichnet. Darüber hinaus gibt es auch reine Stahl-, reine Betontürme oder Gittermasttürme, neuerdings auch Holztürme.

Die Betontürme oder der Betonabschnitt des Schaftes 14 werden entweder in Ortbeton mit einer beispielsweise mitbewegten Schalung oder mittels Fertigbauteilen, wie dies in Figur 2 dargestellt ist, hergestellt. Diese beiden Verfahren sind auch beim erfindungsgemäßen Verfahren zum Errichten einer Windenergieanlage anwendbar.

Bei Fertigbauteilen können entweder ganze Fertigteilringe 32 übereinander gestapelt werden oder Segmente, welche nach dem Aufsetzen auf den bereits fertigen Teil des Schaftes ergänzt werden. Dies gilt auch für Schafte oder Schaftabschnitte aus Stahl, Holz oder für Gittermasten.

In Figur 2 ist ein erster Bauabschnitt zum Errichten einer Windenergieanlage mit einer Nabenhöhe von wenigstens 140 m dargestellt. Hierbei wird ein für leichtere und sehr schwere Lasten ausgelegter, externer Turmdrehkran verwendet, welcher im vorliegenden Fall ein sogenannter mitwachsender Kran ist. Dieser Kran hat einen Schaft 36, welcher vom Boden 16 beginnt und aus Elementen zusammengesetzt ist, wobei weitere Elemente zwischengeschoben oder aufgesetzt werden können, so dass die Höhe des Schafts 36 mit der Turmhöhe wächst. Am oberen Ende des Schaftes ist ein Ausleger 38 angebracht, welcher schwenkbar ist.

Der Kran 33 steht frei, kann allenfalls am oberen Endabschnitt an einigen wenigen Punkten, falls nötig an dem schon bestehenden Teil des Schaftes 14 befestigt sein. Dieser Kran ist aber ein separat stehender und externer Kran. Mit dem Kran 33 werden die Fertigteilringe 32 aufeinander gesetzt und anschließend alle Großkomponenten zur Turmspitze 18 gebracht und dort montiert.

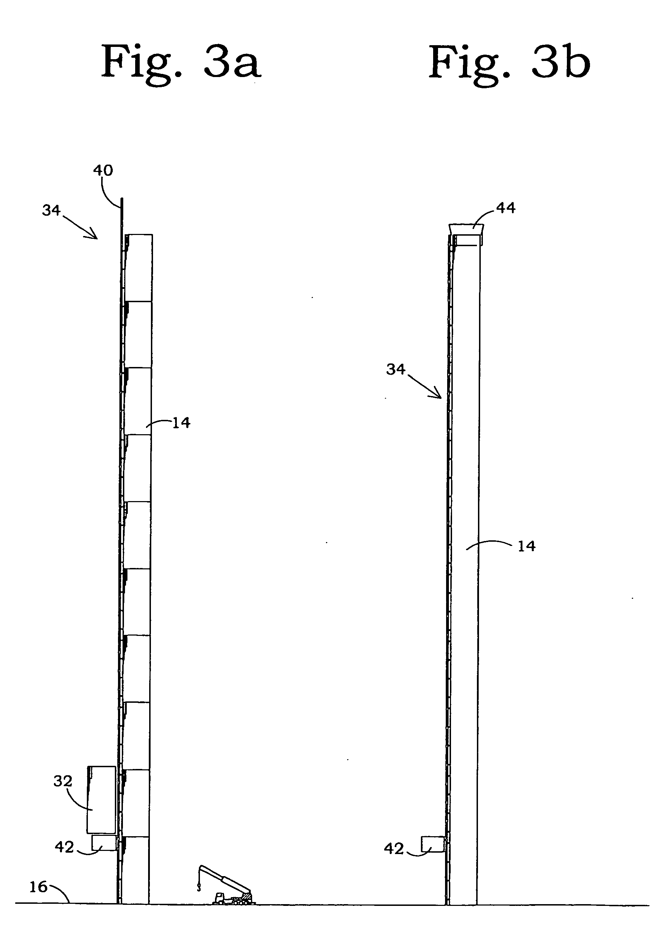

Figur 3a zeigt ein Leichtlast-Hebezeug 34, das in dieser Ausführungsform als Schienenlift ausgeführt ist. Der Schienenlift steht nicht eigenstabil und extern und separat vom schon aufgerichteten Teil des Schafts 14, sondern ist über die gesamte Länge an zahlreichen Stellen am bestehenden Teil des Schafts 14 befestigt, so dass der Turm selbst die Abstützung für dieses nicht stehende Hebezeug darstellt, welches dementsprechend einfacher und weniger robust aufgebaut sein muss, damit aber günstiger in Miete und Anschaffung ist. Die Schienen 40 sind aus aneinander koppelbaren Schienensegmenten zusammengesetzt, so dass die Schiene 40 mit der Errichtung des Schafts 14 mitwächst.

Das Leichtlast-Hebezeug 34, dies gilt vorzugsweise auch für die anderen Ausführungsformen, ist in der Lage, den Schaft 14 komplett aufzubauen. Seine maximale Hebelast beträgt wenige Tonnen, z.B. maximal 25 t, insbesondere max. 20 t. Das Leichtlast-Hebezeug 34 ist nicht in der Lage, ein Rotorblatt 22 oder gar den Generator der Windenergieanlage zur Spitze zu befördern, da seine maximale Hebelast zu gering ist.

Bei der in Figur 3a dargestellten Ausführungsform wird der Schaft 14 aus vorgefertigten Ringen 32 oder Segmenten aufgebaut, so dass für den Aufbau selbst kein externer Kran oder Helikopter notwendig ist. Vom ersten Ring 32 bis zum letzten Ring 32 wird ausschließlich das Leichtlast-Hebezeug 34 eingesetzt. Ein mobiler Kran 28 oder ein kleiner Drehkran kann allenfalls für die Anlieferung, das Umsetzen oder die Positionierung der ersten Fertigteile des Schaftes notwendig sein.

Auf die Spitze des Betonschafts kann, was nicht zwingend der Fall ist, anschließend mittels des Leichtlast-Hebezeugs 34 ein Stahlmast aufgesetzt und daran befestigt werden.

Eine Liftgondel 42 fährt, elektrisch angetrieben, entlang der Schiene 40 vom Boden 16 bis zum Ende der Schienen 40, das heißt zum aktuellen oberen Ende des Schaftes 14, um Ringe 32, Segmente oder sonstige für die Errichtung des Schafts 14 notwendigen Teile zum oberen Ende des Schafts 14 zu bringen.

Fertige Schienenlifte haben eine maximale Hebelast von ebenfalls nur wenigen Tonnen (derzeit ca. 5 t) und sind nicht in der Lage, ein Rotorblatt oder gar einen kompletten Generator mit mehreren Dutzend Tonnen Eigengewicht zur Spitze des fertig errichteten Turms zu transportieren. Jedoch sind solche Schienenlifte in ihrer Miete und ihrem Kauf relativ günstig sowie sehr flexibel, schnell montierbar und demontierbar, ohne dass es eines zusätzlichen Hebezeuges bedarf.

Bezüglich Figur 3a ist noch zu betonen, dass anstelle der Beton-Fertigteile natürlich Stahlringe oder Ringsegmente oder Gittersegmente oder Holzsegmente mittels des Leichtlast-Hebezeugs 34 zu einem Schaft 14 oder Schaftabschnitt zusammengesetzt werden können.

Bei der Ausführungsform nach Figur 3b werden nicht Fertigbetonteile eingesetzt, vielmehr wird der Betonabschnitt des Schafts 14 in Ortbeton hergestellt. Erneut ist ein Leichtlast-Hebezeug 34 in Form eines Schienenlifts eingesetzt, der am bestehenden Teil des Schaftes 14 befestigt ist, also nicht extern, das heißt freistehend ausgeführt ist.

Eine sogenannte Gleitschalung 44 wird vorzugsweise mittels des Leichtlast-Hebezeugs 34 beliefert, während betoniert wird. Der Beton wird ebenfalls über das Leichtlast-Hebezeug 34 zum aktuellen oberen Ende des Schaftes 14 gebracht. Auch hier ist kein externes separates Hebezeug eingesetzt.

Auch bei der Ausführungsform nach Figur 3 kann, zum Beispiel bei Errichtung eines Hybrid-Turms, das Leichtlast-Hebezeug 34 zum Aufsetzen eines Stahlmasts verwendet werden. Auch hier ist kein externer Kran oder Helikopter zum Aufsetzen des Stahlmasts erforderlich.

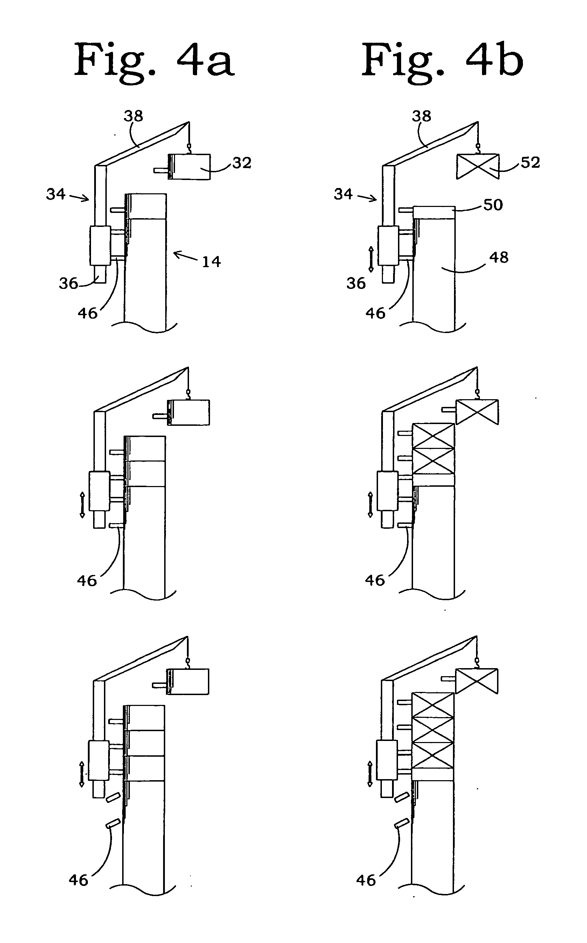

Figur 4a zeigt ein Leichtlast-Hebezeug in Form eines selbst kletternden, d.h. mitkletternden Krans, dessen Kranschaft 36 optional vertikal verstellbar sein kann und der einen Ausleger, insbesondere einen schwenkbaren Ausleger 38 besitzt. Der Kran ist über Halterungen 46 am bestehenden Teil des Schafts 14 angebracht.

Das Leichtlast-Hebezeug 34 transportiert vorgefertigte Ringe 32, oder allgemeiner, Elemente aus Beton, Holz oder Stahl oder entsprechende Segmente vom Boden 16 bis zum augenblicklichen Ende des Schafts 14, um sie aufeinander zu stapeln und miteinander zu verbinden.

Die Halterungen 46 (z.B. abstehende Teile, Flansche, Öffnungen) sind dabei im Bereich des bestehenden oberen Endes des Schafts 14 befestigt. Die Halterungen 46 können bereits am Boden an den Fertigteilen angebracht sein oder erst nachdem sie auf den bestehenden Teil des Schaftes aufgesetzt werden. Das Leichtlast-Hebezeug 34 klettert mittels der Halterungen 46 permanent weiter nach oben, wobei die unteren, nicht mehr gebrauchten Halterungen 46 optional entfernt werden können (siehe unterste Figur der Figuren 4a).

Wie bereits erläutert kann dieser mitkletternde Kran bei Betontürmen oder Hybrid-Türmen eingesetzt werden, um Fertigteilsegmente, eine kletternde Schalung, Stahlsegmente oder den Stahlmast zu setzen.

Figur 4b zeigt einen Turm, der beispielsweise einen unteren Abschnitt 48 aus Stahl oder Beton hat und auf den dann ein Übergangsstück 50 aufgesetzt wird, auf dem wiederum die Gittermastabschnitte 52 vom Hebezeug 34 übereinander gestapelt werden. Auch hier sind Halterungen 46 für den kletternden Kran vorhanden, die auch wieder vom Schaft lösbar sind. Alternativ zu dieser Hybrid-Ausführung kann der Schaft natürlich auch nur als Gittermastschaft ausgeführt sein.

Der Antrieb, d.h. das Hubmittel des Leichtlast-Hebezeugs kann an seinem Krangestell, am Turm oder am Boden positioniert sein.

Nachdem der Turm komplett errichtet ist, wird an der Spitze des Turms ein Schwerlast-Hebezeug 54 angebracht. Dieses Schwerlast-Hebezeug 54 ist für die Montage der Großkomponenten vorgesehen und fördert diese vom Boden 16 zur Spitze 18. Das Schwerlast-Hebezeug 54 hat folglich Hebelasten von mehreren Hundert Tonnen, vorzugsweise bis 300 t. Die Beförderung des Schwerlast-Hebezeugs 54 zur Spitze 18 erfolgt ebenfalls ohne externen Kran oder Helikopter, indem erneut der Turm als Abstützung beim Transport fungiert. Hierzu kann entweder das Leichtlast-Hebezeug 34 verwendet werden, das das Schwerlast-Hebezeug 54 in einem Stück oder in Einzelteilen zur Spitze 18 fährt.

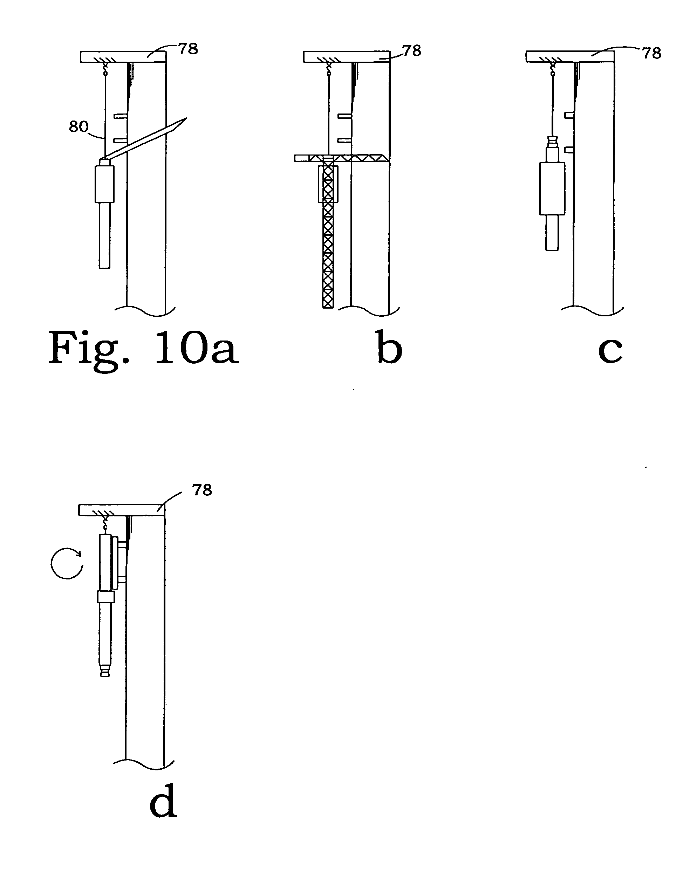

Alternativ hierzu wäre es jedoch auch möglich, dass sich das Schwerlast-Hebezeug 54 selbst zur Spitze zieht, ähnlich wie dies anhand der Figuren 10 später noch erläutert wird. In diesem Fall würde das Leichtlast-Hebezeug 54 beispielsweise das Zugmittel, zum Beispiel ein Stahlseil des Schwerlast-Hebezeugs 54, zur Spitze 18 transportieren und dort befestigen oder umlenken. Anschließend könnte das Schwerlast-Hebezeug 54 sich selbst zur Spitze 18 ziehen.

Ganz allgemein ist zu betonen, dass das Schwerlast-Hebezeug 54 nur für die Montage der schweren Großkomponenten sehr kurzzeitig eingesetzt wird, d.h. zum Turm transportiert mit diesem unter Nutzung des Turms als Kranschaft temporär zur Bildung eines Schwerlastkrans gekoppelt wird.

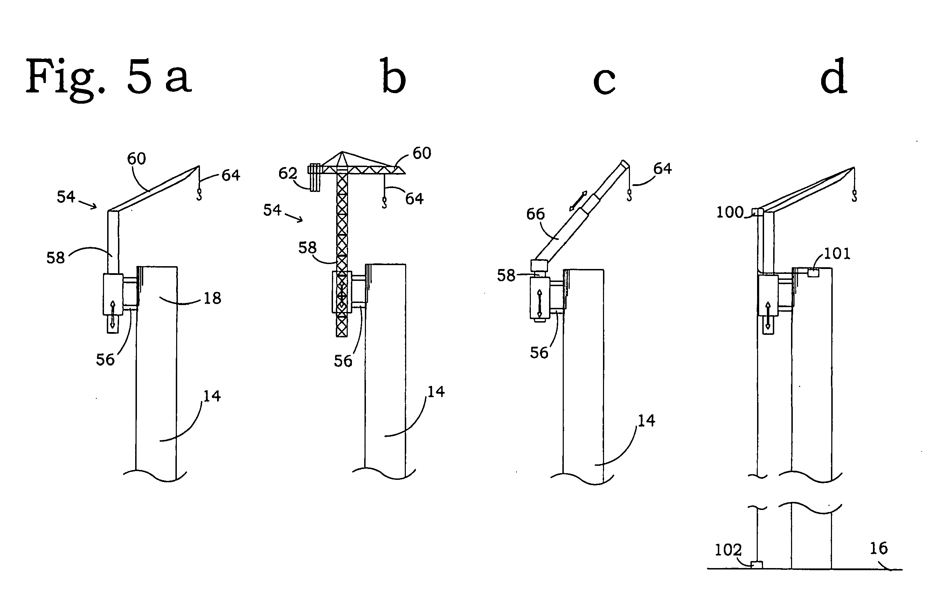

Bei den Ausführungsformen nach den Figuren 5a bis c ist das Schwerlast-Hebezeug 54 an Halterungen 56 am Rand der Spitze 18 befestigt, die gegenüber dem Schaft 14 nach außen vorstehen. Alternativ hierzu könnte das Schwerlast-Hebezeug 54 auch auf der Oberseite der Spitze 18 positioniert sein.

Bei der Ausführungsform nach Figur 5a ist das Schwerlast-Hebezeug 54 ein Kran mit einem zum Beispiel vertikal verfahrbaren Schaft 58 und einem Ausleger 60. Der Kran oder nur der Ausleger kann optional verschwenkbar sein.

Bei der Ausführungsform nach Figur 5b ist das Schwerlast-Hebezeug 54 ein Gittermastkran mit einem vorzugsweise ebenfalls vertikal verstellbaren Schaft 58 und einem Ausleger 60, der auf der entgegengesetzten Seite einen Arm mit Gegengewichten 62 besitzt. Auch dieser Kran kann optional verschwenkbar sein. Die Position des Zugmittels 64 ist über eine nicht gezeigte Laufkatze am Ausleger 60 verstellbar.

Das Schwerlast-Hebezeug 54 nach Figur 5c ist ein Kran mit einem TeleskopAusleger 66. Auch dieser Kran kann schwenkbar und/oder vertikal im Bereich des Schaftes 58 verstellbar sein.

Das Hebemittel, also der Antrieb für den sich bildenden Schwerlastkran, kann am zur Spitze transportierten Krangestell angebracht sein, siehe Hebemittel 100, oder an der Turmspitze 18 sitzen und über ein Zugmittel (üblicherweise ein Seil) mit der am Krangestell vorgesehenen Umlenkung gekoppelt sein, siehe Hebemittel 101.

Alternativ hierzu wäre es gemäß Figur 5d auch möglich, einen Kragarm oder ein relativ kleines Krangestell an der Turmspitze 18 permanent oder nur temporär für das Montieren der Großkomponenten zu befestigen und das teure Hebemittel 102, d.h. den Antrieb für den Schwerlastkran, am Boden zu belassen, bei Bedarf heranzufahren und an ein auf- und abwickelbares Zugmittel (Seil) anzukoppeln, das bis zum Kragarm oder Krangestell reicht und dort umgelenkt wird. Dadurch ergibt sich ein Schwerlastkran mit Antrieb am Boden.

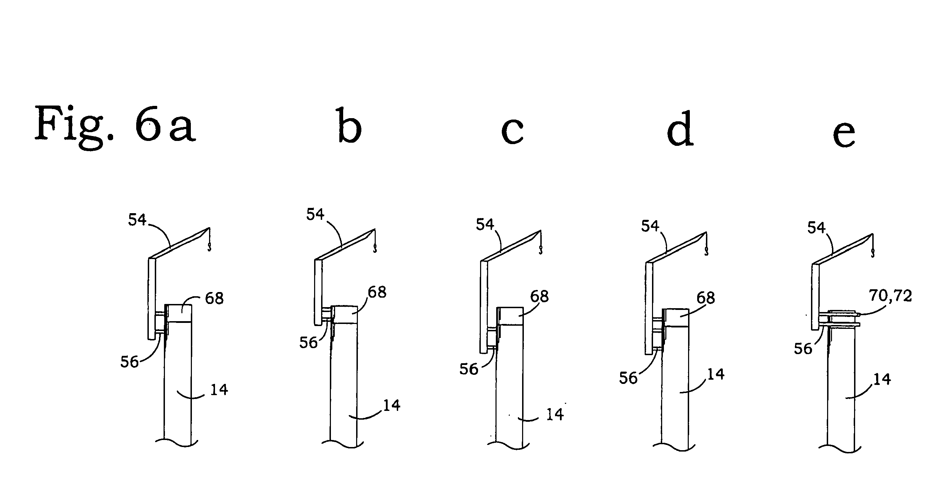

In den Figuren 6a bis e ist im Detail dargestellt, dass das Schwerlast-Hebezeug 54 an verschiedenen Stellen der Spitze 18 befestigt sein kann. Nur rein exemplarisch ist hier ein Schwerlast-Hebezeug wie in Figur 5a dargestellt, was jedoch nicht einschränkend zu verstehen ist. Vielmehr soll dieser Kran nur als Symbol für jegliche Art von Schwerlast-Hebezeug 54 gelten.

Auf den Schaftabschnitt 14 aus Beton oder Stahl wird gemäß Option a) noch ein sogenannter Kopfadapter 68 aufgesetzt, der als Übergangsstück zwischen dem Schaft 14 und der Gondel 20 dienen soll und vorzugsweise eine Art Stahlgestell ist. Alternativ hierzu ist der Kopfadapter 68 lediglich als Flansch ausgeführt.

Bei der Ausführungsform nach Figur 6a ist das Schwerlast-Hebezeug 54 sowohl am Kopfadapter 68 als auch am darunterliegenden Schaftabschnitt befestigt.

Bei der Ausführungsform nach Figur 6b erfolgt die Befestigung des Schwerlast-Hebezeugs 54 lediglich am Kopfadapter 68 und bei der Ausführungsform nach Figur 6c lediglich am Schaft 14 unterhalb des Kopfadapters 68.

Es können auch, wie Figur 6d zeigt, mehrere Befestigungen entweder am Schaft 14 und/oder am Kopfadapter 68 vorgesehen sein.

Während bei den Ausführungsformen nach den Figuren 6a bis d das Schwerlast-Hebezeug 54 an einer stationären Stelle am Turm angebracht ist, ist bei der Ausführungsform nach Figur 6e eine um das Turmende verlaufende Führung 70 vorhanden, längs der das Schwerlast-Hebezeug 54 um den Turm herum verfahrbar ist. Alternativ hierzu kann auch eine Kranbrücke 72 vorhanden sein, die zum Beispiel auch seitlich des Turmes an diesem befestigt werden kann.

Wenn anstatt eines Kopfadapters 68 gemäß Figur 6b ein Stahlmast vorhanden ist, wird das Schwerlast-Hebezeug 54 am oberen Ende des Stahlmasts angebracht. Der Kopfadapter 68 stellt zeichnerisch in diesem Fall den Stahlmast dar.

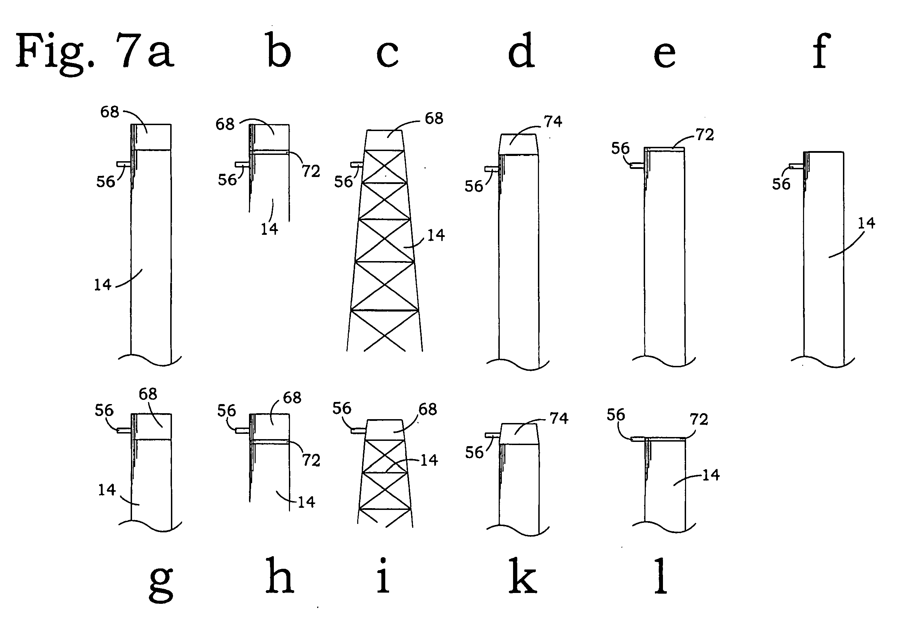

In den Figuren 7a bis l sind verschiedene Varianten der Ausbildung des Turmes und der Turmspitze und der Positionierung der Halterungen 56 für das Schwerlast-Hebezeug 54 dargestellt.

Figur 7a zeigt den Schaft 14 und den Kopfadapter 68 sowie die am Schaft 14 vorgesehene Halterung 56 oder Halterungen 56.

Zwischen dem Kopfadapter 68 und dem Schaft 14 kann auch der vorgenannte Zwischenflansch vorgesehen sein, der in Figur 7b das Bezugszeichen 72 trägt. Auch er kann eventuell die Halterung 56 tragen (siehe Figur 7l).

Beim Gittermastturm gemäß Figur 7c ist die Halterung 56 im Bereich des Gittermastschafts vorgesehen, sie könnte aber auch (siehe Figur 7i) an einem optional vorgesehenen Kopfadapter 68 vorhanden sein.

Die am Kopfadapter 68 vorgesehene Halterung 56 ist auch bei den Konstruktionen nach Figur 7g und h vorhanden, bei denen der Kopfadapter 68 unmittelbar auf den Schaft 14 aufgesetzt ist (siehe Figur 7g), gegebenenfalls unter Zwischenschaltung des Zwischenflansches 72 (siehe Figur 7h).

Wenn ein auf den Schaft aufgesetztes Übergangsstück 74 vorgesehen ist, wie dies in den Figuren 7d und k gezeigt ist, kann die Halterung 56 am oder knapp unterhalb des Übergangsstücks 54 oder natürlich an beiden angebracht sein. Auf das Übergangsstück 74 wird dann die Gondel oder der Kopfadapter 68 aufgesetzt.

Bei der Ausführungsform nach Figur 7f ist die Halterung 56 am Schaft 14 selbst vorgesehen, hier wird die Gondel unmittelbar auf den Schaft 14 aufgesetzt.

Natürlich können Halterungen 64 an mehreren der dargestellten Teile und Abschnitte vorhanden sein, was vorteilhaft ist. Die Figuren 7a bis l zeigen nur Optionen zur Anbringung der Halterungen 56.

Die Halterungen 56 bleiben vorzugsweise dauerhaft am Turm, um das Wiederaufsetzen des Schwerlast-Hebezeugs zum Warten, worunter auch Reparieren fällt, oder zum Demontieren der Großkomponenten am Turm zu erlauben, wobei das Verfahren zum Warten und Demontieren der Windkraftanlage nicht unter den Schutzumfang des Patentes fällt, aber zum Komplettierung der Schilderung des Lebenszyklus einer Windkraftanlage erläutert wird.

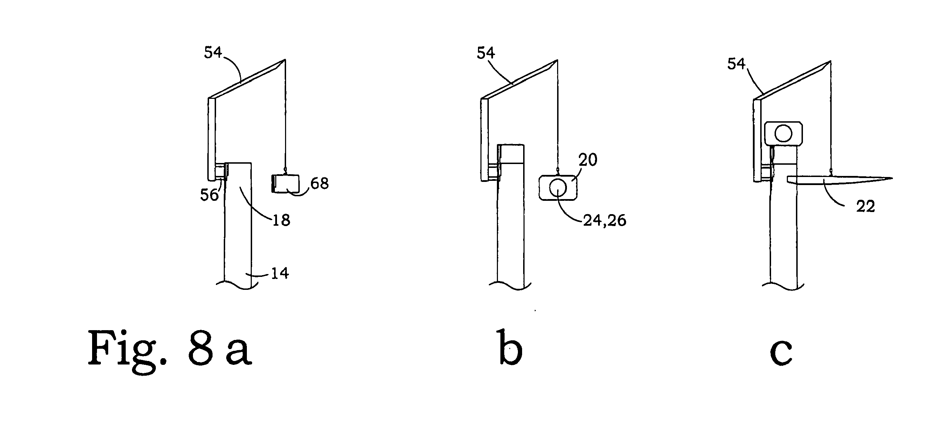

Im nächsten Schritt werden, wie in den Figuren 8a bis c dargestellt, die Großkomponenten mittels des Schwerlast-Hebezeugs 54 vom Boden 16 bis zur Spitze 18 transportiert. Der Zwischenflansch 72 oder der Kopfadapter 68 können dabei zuerst auf den Schaft 14 aufgesetzt werden (siehe Figur 8a).

Die Gondel 20, vorzugsweise bereits mit Getriebe 24 und Generator 26 bestückt, wird auf die Spitze 18 aufgesetzt (siehe Figur 8b). Auch dies erfolgt ausschließlich mit dem Schwerlast-Hebezeug 54.

Anschließend werden die sehr schweren Rotorblätter 22 vom Boden zur Gondel 20 mittels des Schwerlast-Hebezeugs 54 hochgezogen und an der Gondel montiert. Bei dieser Montage ist ebenfalls kein externer Kran erforderlich, der die Großkomponenten zur Spitze 18 transportiert.

Lediglich beim Abheben der Rotorblätter 22 vom Boden kann eine Winde oder dergleichen eingesetzt werden, damit das Rotorblatt exakt positioniert und nicht beschädigt wird, wenn es beispielsweise beim Abheben leicht kippen würde.

Nach der Montage der Großkomponenten wird das Schwerlast-Hebezeug 54 wieder von der Spitze demontiert, vorzugsweise bereits vor der ersten Inbetriebnahme, allenfalls spätestens nach ersten Testläufen. Die Demontage des Schwerlast-Hebezeugs kann über das eventuell nach wie vor am Turm befestigte Leichtlast-Hebezeug erfolgen, oder das Schwerlast-Hebezeug 54 demontiert sich selbst oder fährt sich selbst zum Boden zurück. Auch für diese Demontage ist kein externer Kran oder Helikopter eingesetzt.

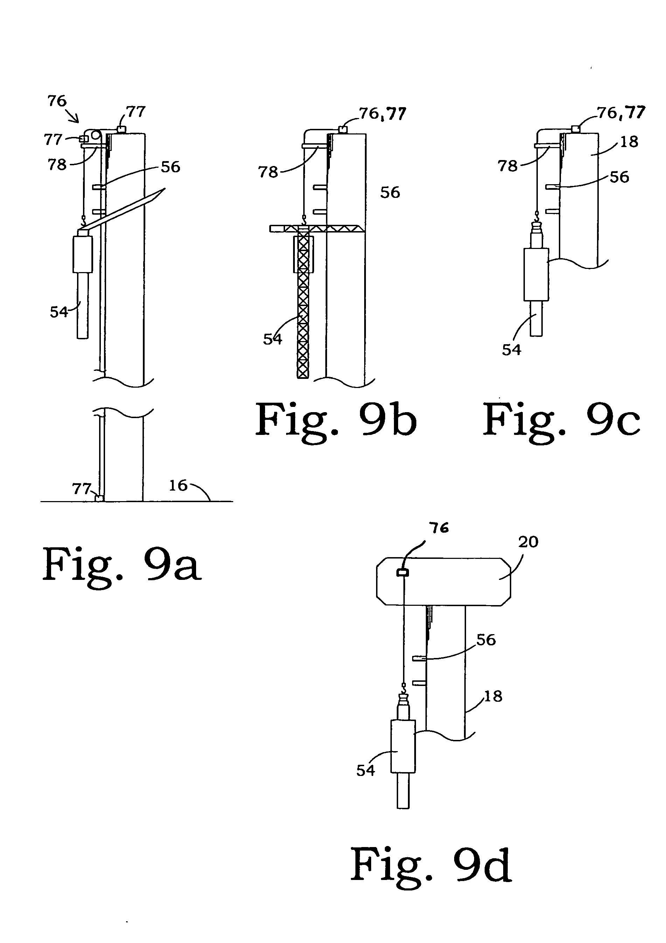

Mittels des Leichtlast-Hebezeugs 34 oder des Schwerlast-Hebezeugs 54 wird ein Hilfs-Hebezeug 76 zur Spitze 18 gebracht und an dieser bleibend angebracht. In den Figuren 9a bis d sind dieses Hilfs-Hebezeug 76 und Beispiele für die Positionierung des Hilfs-Hebezeugs 76 dargestellt.

Das Hilfs-Hebezeug 76 umfasst zum Beispiel eine einfache, kostengünstige Winde, d.h. einen Antrieb oder auch Hebemittel genannt, und gegebenenfalls einen Kragarm 78 oder ein kleines Krangestell an der Turmspitze 18. Das Hebemittel 77 kann beispielsweise seitlich der in den Figuren 9a bis c nicht dargestellten Gondel im Bereich der Spitze 18 vorgesehen sein und umgelenkt werden oder an einem permanent vorgesehenen seitlichen Kragarm 78 (siehe Figur 9a) oder am Boden stehen und ein an der Turmspitze 18 umgelenktes Zugmittel antreiben.

Das Hilfs-Hebezeug 76 zieht für die Wartung oder Demontage von Großkomponenten das Schwerlast-Hebezeug 54, das für diesen Einsatz wieder zur Windenergieanlage herangefahren wurde, auf die Spitze 18, wo das Schwerlast-Hebezeug 54 an den Halterungen 56 befestigt wird. Erneut werden keine externen Kräne oder Helikopter eingesetzt. Unter Abstützung an der Turmspitze und damit Nutzung des Turms als Kranschaft, hier durch Verwendung des Hilfs-Hebezeugs 76 an der Turmspitze 18, wird das Schwerlast-Hebezeug 54 zur Spitze 18 hochgezogen und temporär an dieser befestigt, beispielsweise um ein defektes Rotorblatt 22 zu wechseln, ohne einen externen Kran oder einen Helikopter zu benötigen. Nach dem Auswechseln oder Abbauen der Großkomponente oder der Großkomponenten wird vor der Wiederinbetriebnahme der Windenergieanlage das Schwerlast-Hebezeug 54 wieder abgebaut, insbesondere über das permanent vorhandene Hilfs-Hebezeug 76, das nur wenige Tonnen Hebekraft besitzt.

Das Hilfs-Hebezeug 76 kann aber auch in der Gondel 20 untergebracht sein (siehe Figur 9d) und von dort aus das Schwerlast-Hebezeug 54 zur Spitze transportieren.

Ein Kragarm oder das relativ kleines Krangestell an der Turmspitze 18 erlauben es auch (siehe Figur 9a), das Hebemittel 77, also den Antrieb des Hilfs-Hebezeugs 76 am Boden zu belassen und vom Boden aus ein durch das Hebemittel 77 auf- und abwickelbares Zugmittel (Seil) zu bewegen, das bis zur Turmspitze reicht und dort um eine Umlenkrolle am Kragarm 78 oder Krangestell läuft. Dadurch ergibt sich ein Hilfs-Hebezeug 76 mit Antrieb am Boden.

Zum Auswechseln bzw. Abbauen einer Großkomponente wird, allgemein gesagt, ein für die Montage von Großkomponenten geeignetes Schwerlast-Hebezeug zum Turm transportiert mit diesem unter Nutzung des Turms als Kranschaft temporär zur Bildung eines Schwerlastkrans gekoppelt, um nach der Montage oder Demontage wieder entfernt zu werden.

Generell ist das Schwerlast-Hebezeug vorzugsweise mit einem Ausleger versehen oder gekoppelt, der es erlaubt, das Zugmittel des Schwerlast-Hebezeugs von oberhalb der Gondel unter Abstützung am Turm zur Gondel oder den Rotorblättern herabzulassen. Dieser Ausleger kann nur für das Errichten, Warten oder für die Demontage temporär kurzzeitig zur Spitze gebracht werden oder aber permanent an der Spitze angebracht sein. Das Schwerlast-Hebezeug wird im Fall mit permanent angebrachtem Ausleger durch das Hebemittel gebildet, also den elektrischen Antrieb in Form einer Schwerlastwinde oder eines großen Litzenhebers.

Eine weitere Möglichkeit der Montage des Schwerlast-Hebezeugs 54 besteht darin, dieses in Einzelteilen zur Turmspitze zu bringen, beispielsweise indem, ähnlich wie es in den Figuren 9a bis d gezeigt ist, das Krangestell getrennt vom Hebemittel zur Turmspitze 18 gebracht wird und beide dort miteinander gekoppelt werden.

Bei der Ausführungsform nach den Figuren 10a bis 10d ziehen sich die Schwerlast-Hebezeuge 54 selbsttätig zur Spitze 18, und zwar vorzugsweise samt des Krangestells. Hierzu wird entweder an der Gondel 20 oder an einem permanent an der Spitze 10 befestigten, seitlichen Kragarm 78 das Zugmittel 80 des Schwerlast-Hebezeugs 54 angebracht.

Das Zugmittel 80 kann gegebenenfalls mit dem Hilfs-Hebezeug 76 zur Spitze 10 gebracht werden. Anschließend zieht sich, wie gesagt, das Schwerlast-Hebezeug 54 selbsttätig nach oben. Dabei kann das Schwerlast-Hebezeug 54 kopfüber nach oben gezogen, zuerst an den Halterungen 56 befestigt, anschließend geschwenkt werden oder durch eine entsprechende Halterung hindurchgesteckt werden.

Natürlich ist es auch möglich, Schwerlast-Hebezeuge 54 mit Gegengewichten vorzusehen.

Ferner kann das Schwerlast-Hebezeug ganz allgemein als Turmdrehkran oder als Teleskopausleger mit und ohne vertikal verfahrbaren Schaft ausgeführt sein.

Die Hebezeuge sind, dies gilt ebenfalls für alle Ausführungsformen, vorzugsweise elektrisch betrieben.

Ein weiterer Vorteil der Erfindung ist, dass das Schwerlast-Hebezeug 54 bei der Montage und/oder Demontage der Großkomponenten im Bereich der Turmspitze 18 befestigt ist, so dass keine langen Hebelarme wie bei einem am Boden aufgesetzten Turmdreh- oder Mobilkran vorhanden sind, bei denen die Positionierung der daran hängenden Komponenten für die Montage/Demontage sehr schwierig ist, erst recht bei Wind. Dies gilt auch für die Variante, dass ein Kragarm oder ein kleines Krangestell permanent an der Turmspitze angebracht ist, an die das Schwerlast-Hebezeug in Form des Hebemittels temporär angekoppelt wird.

## Patentansprüche

1. Verfahren zum Errichten einer Windenergieanlage, insbesondere mit einer Nabenhöhe von mindestens 140 m, mit einem Turm und auf der Turmspitze (18) angebrachten Großkomponenten, die eine Gondel (20), einen Generator (26) und einen Rotor mit wenigstens einem Rotorblatt (22) umfassen, wobei:
ein für leichtere Lasten ausgelegtes Leichtlast-Hebezeug (34) wird zur Errichtung des Turmes verwendet und ist während der Errichtung am Turm angebracht, um mit dem Turm bei dessen Errichtung an Höhe zu gewinnen,
ein für die Montage der Großkomponenten geeignetes Schwerlast-Hebezeug (54) wird zum Turm transportiert, durch das Leichtlast-Hebezeug (34) zur Turmspitze (18) gehoben und mit dem Turm unter Nutzung des Turms als Kranschaft temporär zur Bildung eines Schwerlastkrans gekoppelt, wobei das Schwerlast-Hebezeug (54) unter Abstützung am Turm zur Turmspitze (18) transportiert und an dieser temporär befestigt und nach der Montage der Großkomponenten unter Abstützung am Turm wieder vom Turm demontiert wird,
zumindest eines der Großkomponenten, nämlich zumindest der Generator (26) wird durch das Schwerlast-Hebezeug (54) zur Turmspitze (18) gehoben und montiert,
das Schwerlast-Hebezeug (54) wird nach der Montage der Großkomponenten wieder vom Turm entkoppelt.

2. Verfahren nach einem der vorhergehenden Ansprüche, **dadurch gekennzeichnet, dass** das Leichtlast-Hebezeug (34) ein Schienenlift oder ein mitkletternder Kran ist.

3. Verfahren nach einem der vorhergehenden Ansprüche, **dadurch gekennzeichnet, dass** das Schwerlast-Hebezeug (54) eine Winde oder ein Litzenheber ist oder durch ein Krangestell mit einer Winde oder einem Litzenheber als Hebemittel gebildet ist.

4. Verfahren nach einem der vorhergehenden Ansprüche, **dadurch gekennzeichnet, dass** an der Turmspitze (18), insbesondere permanent, ein Krangestell vorhanden ist und dass das Schwerlast-Hebezeug (54) temporär zur Turmspitze (18) gebracht wird und mit dem Krangestell zur Bildung eines Krans gekoppelt wird und nach Errichten, Wartung beziehungsweise Demontage wieder von der Turmspitze (18) entfernt wird.

5. Verfahren nach einem der vorhergehenden Ansprüche, **dadurch gekennzeichnet, dass** an der Turmspitze (18) eine Kranbrücke (72) und/oder ein Turmkragarm (78) permanent angebracht ist, auf die das Schwerlast-Hebezeug (54) temporär aufgesetzt wird.

6. Verfahren nach einem der vorhergehenden Ansprüche, **dadurch gekennzeichnet, dass** das Schwerlast-Hebezeug (54) turmseitig befestigt wird und sich selbst zur Turmspitze (18) hochzieht.

7. Verfahren nach einem der vorhergehenden Ansprüche, **dadurch gekennzeichnet, dass** das Schwerlast-Hebezeug (54) allein eine solche Hebekraft hat, dass es jedes der Großkomponenten zur Turmspitze (18) heben kann.

8. Verfahren nach einem der vorhergehenden Ansprüche, **dadurch gekennzeichnet, dass** für die Errichtung und für das Warten das gleiche Schwerlast-Hebezeug (54) verwendet wird.

9. Verfahren nach einem der vorhergehenden Ansprüche, **dadurch gekennzeichnet, dass** das Schwerlast-Hebezeug bei der Montage und/oder Demontage der Großkomponenten im Bereich der Turmspitze befestigt ist.

## Claims

1. A method of erecting a wind energy plant, in particular with a hub height of at least 140 m, comprising a tower and large components attached to the tower top (18), the large components comprising a nacelle (20), a generator (26) and a rotor having at least one rotor blade (22), wherein:
a light-duty lifting device (34) designed for lighter-weight loads is used for erecting the tower and is attached to the tower during construction, in order to gain height together with the tower during construction thereof,
a heavy-duty lifting device (54) suitable for the installation of the large components is transported to the tower, is lifted to the tower top (18) by means of the light-duty lifting device (34) and is temporarily coupled to the tower to form a heavy-duty crane, using the tower as a crane mast, the heavy-duty lifting device (54) being transported to the tower top (18) while being supported against the tower, being temporarily fastened to the tower top, and, after installation of the large components, being dismounted from the tower again while being supported against the tower,
at least one of the large components, namely at leastl the generator (26), is lifted to the tower top (18) by the heavy-duty lifting device (54) and installed there,
the heavy-duty lifting device (54) is decoupled from the tower again after installation of the large components.

2. The method according to any of the preceding claims, **characterized in that** the light-duty lifting device (34) is a rail-type lift or a climbing crane.

3. The method according to any of the preceding claims, **characterized in that** the heavy-duty lifting device (54) is a winch or a strand jack or is formed by a crane frame comprising a winch or a strand jack as a lifting means.

4. The method according to any of the preceding claims, **characterized in that** a crane frame is present on the tower top (18), in particular permanently, and **in that** the heavy-duty lifting device (54) is brought to the tower top (18) temporarily and is coupled to the crane frame to form a crane and is removed again from the tower top (18) after erection, maintenance and/or dismounting.

5. The method according to any of the preceding claims, **characterized in that** the tower top (18) has a crane bridge (72) and/or a tower cantilever arm (78) permanently attached thereto, on which the heavy-duty lifting device (54) is temporarily placed.

6. The method according to any of the preceding claims, **characterized in that** the heavy-duty lifting device (54) is fastened to the tower and pulls itself up to the tower top (18).

7. The method according to any of the preceding claims, **characterized in that** the heavy-duty lifting device (54) by itself has such a lifting force that it is capable of lifting each of the large components to the tower top (18).

8. The method according to any of the preceding claims, **characterized in that** the same heavy-duty lifting device (54) is used for erection and for maintenance.

9. The method according to any of the preceding claims, **characterized in that** the heavy-duty lifting device is fastened in the area of the tower top during installation and/or dismounting of the large components.

## Revendications

1. Procédé de construction d'une éolienne, en particulier avec une hauteur de moyeu d'au moins 140 m, comportant une tour et des composants de grande taille agencés sur la pointe (18) de la tour lesquels comprennent une nacelle (20), un générateur (26) et un rotor présentant au moins une pale de rotor (22),
un engin de levage (34) pour charges légères conçu pour des charges plus légères étant utilisé pour le montage de la tour et étant agencé sur la tour pendant le montage afin de gagner de la hauteur avec la tour lors de son montage,
un engin de levage (54) pour charges lourdes adapté au montage des composants de grande taille étant transporté vers la tour, étant levé vers la pointe (18) de la tour au moyen de l'engin de levage (34) pour charges légères et étant couplé temporairement à la tour en utilisant la tour en tant que corps de grue pour former une grue pour charges lourdes, l'engin de levage (54) pour charges lourdes étant transporté vers la pointe (18) de la tour en s'appuyant sur la tour et étant fixé temporairement à celle-ci et étant de nouveau démonté de la tour après le montage des composants de grande taille en s'appuyant sur la tour,
au moins l'un des composants de grande taille, à savoir au moins le générateur (26) étant levé vers la pointe (18) de la tour et monté sur celle-ci au moyen de l'engin de levage (54) pour charges lourdes,
l'engin de levage (54) pour charges lourdes étant de nouveau découplé de la tour après le montage des composants de grande taille.

2. Procédé selon l'une des revendications précédentes, **caractérisé en ce que** l'engin de levage (34) pour charges légères est un élévateur sur rails ou une grue grimpante.

3. Procédé selon l'une des revendications précédentes, **caractérisé en ce que** l'engin de levage (54) pour charges lourdes est un treuil ou un dispositif de levage à torons ou est formé par un bâti de grue présentant un treuil ou un dispositif de levage à torons en tant que moyen de levage.

4. Procédé selon l'une des revendications précédentes, **caractérisé en ce qu'**un bâti de grue est présent en particulier de manière permanente sur la pointe (18) de la tour et **en ce que** l'engin de levage (54) pour charges lourdes est amené temporairement vers la pointe (18) de la tour et est couplé au bâti de grue pour former une grue et est de nouveau retiré de la pointe (18) de la tour après la construction, l'entretien ou le démontage.

5. Procédé selon l'une des revendications précédentes, **caractérisé en ce qu'**un pont de grue (72) et/ou un bras de tour en porte-à-faux (78) sur lequel l'engin de levage (54) pour charges lourdes est temporairement placé est agencé de manière permanente sur la pointe (18) de la tour.

6. Procédé selon l'une des revendications précédentes, **caractérisé en ce que** l'engin de levage pour charges lourdes (54) est fixé du côté de la tour et se remonte lui-même vers la pointe (18) de la tour.

7. Procédé selon l'une des revendications précédentes, **caractérisé en ce que** l'engin de levage (54) pour charges lourdes a lui-même une telle force de levage qu'il est apte à lever chacun des composants de grande taille vers la pointe (18) de la tour.

8. Procédé selon l'une des revendications précédentes, **caractérisé en ce que** le même engin de levage (54) pour charges lourdes est utilisé pour la construction et pour l'entretien.

9. Procédé selon l'une des revendications précédentes, **caractérisé en ce que** l'engin de levage pour charges lourdes est fixé dans la zone de la pointe de la tour lors du montage et/ou du démontage des composants de grande taille.
